**Europäisches Patentamt**

**European Patent Office**

**Office européen des brevets**

(19)

(11)  **EP 1 315 308 A1**

(12)  ## DEMANDE DE BREVET EUROPEEN

(43) Date de publication:
**28.05.2003 Bulletin 2003/22**

(51) Int Cl.7: **H04B 1/707**

(21) Numéro de dépôt: **02292903.8**

(22) Date de dépôt: **22.11.2002**

(84) Etats contractants désignés:
**AT BE BG CH CY CZ DE DK EE ES FI FR GB GR IE IT LI LU MC NL PT SE SK TR**
Etats d'extension désignés:
**AL LT LV MK RO SI**

(30) Priorité: **23.11.2001 FR 0115192**

(71) Demandeur: **Thales**
**75008 Paris (FR)**

(72) Inventeurs:
• **Martin, Nicolas, Thales Intellectual Property**
**94117 Arcueil cédex (FR)**
• **Coatantiec, Blandine,**
**Thales Intellectual Property**
**94117 Arcueil cédex (FR)**

(74) Mandataire: **Dudouit, Isabelle**
**THALES Intellectual Property**
**13, avenue Président Salvador Allende**
**94117 Arcueil Cedex (FR)**

(54)  **Procédé et dispositif de poursuite des signaux de radionavigations modulés BOC (Binary Offset Carrier)**

(57)    L'invention concerne la radionavigation par satellite, notamment la radionavigation par satellite de type GPS (Global Positioning System), Galileo, GLONASS (Global Navigation Satellite System, définition russe)...

La présente invention permet de rendre le récepteur pour le mode code Only en poursuite plus robuste non seulement avec une modulation BOC mais avec toute modulation comportant une ou plusieurs sous-porteuse.

L'invention propose un procédé de calcul de la fonction discriminante de signaux modulés par une modulation avec une ou plusieurs sous-porteuse caractérisé en ce qu'il comporte l'élimination de la ou lesdites sous-porteuses.

L'invention concerne en outre un dispositif de poursuite de signaux de radionavigation par satellite modulés BOC. Il comporte un dispositif de calcul de la fonction discriminante mettant en oeuvre le procédé de calcul de la fonction discriminante éliminant la ou lesdites sous-porteuses. La fonction discriminante est utilisée par la boucle de code dudit dispositif de poursuite de signaux.

Fig. 3

EP 1 315 308 A1

**EP 1 315 308 A1**

**Description**

L'invention concerne la radionavigation par satellite, notamment la radionavigation par satellite de type GPS (Global Positioning System), Galileo, GLONASS (Global Navigation Satellite System, définition russe)...

La radionavigation par satellite permet d'obtenir la position du récepteur par une méthode voisine de la triangulation. Les distances sont mesurées à partir de signaux envoyés par des satellites.

Les signaux émis par les satellites sont formés par modulation de la porteuse du signal avec un code d'étalement. Ainsi, les signaux satellites permettent deux types de mesure afin de localiser le récepteur. De plus, la modulation de la porteuse par un code d'étalement étend le spectre dans la bande spectrale, ce qui accroît la résistance du système au brouillage. Et, en outre, cela permet de dissocier les satellites (en utilisant un code différent par satellite).

Le premier type de mesure de distance par radionavigation par satellite est une mesure classique basée sur la porteuse du signal reçu. Les mesures basées sur la phase de la porteuse sont précises mais ambiguës. En effet, le récepteur est capable d'évaluer le nombre de longueur d'onde entre le satellite et le récepteur à modulo la longueur d'onde près.

Le deuxième type de mesure de distance utilise le code du signal reçu. Les mesures basées sur le code contrairement à celles basées sur la porteuse ne sont pas ambiguës, car le récepteur est capable d'évaluer le nombre entier de périodes de code entre le satellite et le récepteur. Mais, les mesures basées sur le code sont beaucoup moins précises que celles basées sur la phase.

Pour effectuer ces deux types de mesure, le récepteur acquiert et poursuit le signal reçu. Pour cela, il génère des répliques du code et de la porteuse, dites locales, qu'il corrèle avec le signal reçu . Le code et la porteuse étant des informations non cohérentes, les générations des répliques de code et de porteuse sont asservies par deux boucles distinctes.

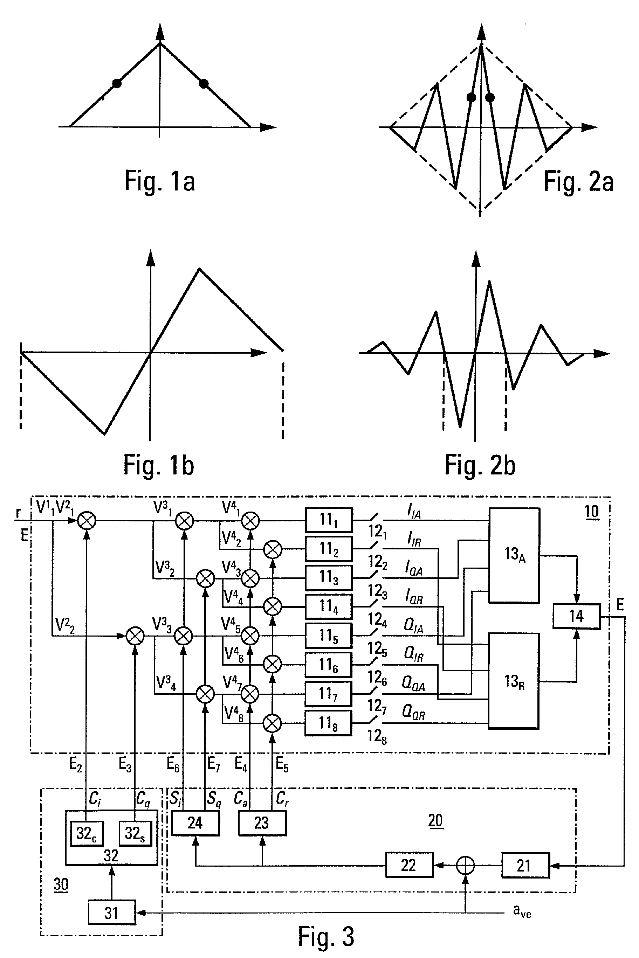

La boucle de porteuse est généralement une PLL, c'est à dire Phase Lock Loop ou boucle à verrouillage de phase en français, telle que la boucle de Costa par exemple. La boucle de code comporte généralement une double corrélation permettant d'évaluer le décalage entre le code local et le code reçu qui correspond à une différence d'énergie mesurable comme le montre la figure 1a pour une modulation BPSK. Tout d'abord, une corrélation en phase de code permet l'asservissement de la boucle de porteuse. La différence des I corrélations de codes en avance et retard permet l'asservissement de la boucle de code. Cettedifférence, appelée fonction discriminante, est représentée par la figure 1b pour une modulation BPSK.

Le récepteur utilise ces deux boucles afin d'obtenir des mesures précises et non ambiguës. Dans une première phase, dite d'acquisition, le récepteur opère en boucle ouverte pour rechercher le signal reçu en testant plusieurs hypothèses de position et de vitesse du code local et de la porteuse locale. Une fois que la boucle de code permet la levée de l'ambiguïté, le récepteur opère en boucle fermée. La boucle de porteuse apporte ses mesures précises et la boucle de code permet le suivi.

Dans le cas où le rapport signal à bruit serait faible, par exemple en cas de brouillage, la boucle de porteuse est la première à décrocher. Si le récepteur dispose d'une aide de vitesse externe, il peut continuer à fonctionner en Code Only, c'est à dire avec la seule boucle de code sans l'aide de la boucle de porteuse.

Généralement , la modulation utilisée dans les systèmes de radionavigation par satellite est la modulation BPSK, c'est à dire Binary Phase Shift Keying ou modulation binaire à décalage de phase. Une autre modulation: la modulation BOC, c'est à dire Binary Offset Chip ou modulation sur porteuse à double décalage, peut lui être préférée car elle permet une utilisation différente de la bande disponible. Par exemple, lors d'application militaire, cela permet de récupérer de l'énergie lorsque la bande utilisée par la modulation BPSK est brouillée. Pour des applications civiles, elle rend le système compatible aux systèmes américains qui utilisent des bandes différentes. De plus, avec la modulation BOC, les performances du récepteur sont meilleures car le spectre est plus étalé.

Les figures 2a et 2b représentent respectivement la fonction d'autocorrélation et la fonction discriminante pour la modulation BOC.

L'inconvénient de la modulation BOC est que le récepteur en poursuite est moins robuste en mode code Only que lorsque la modulation utilisée est une modulation BPSK. La fonction d'autocorrélation du code qui détermine les zones d'équilibre stables (ou de capture) de la boucle de code est, elle aussi, modulée par la sous-porteuse. L'effet de cette modulation est la réduction de la zone de capture centrale et, donc, l'augmentation de la probabilité de décrochage de l'asservissement en sortant de cette zone. Le décrochage est dû aux bruits ou à un traînage dynamique.

La présente invention permet de rendre le récepteur pour le mode code Only en poursuite plus robuste non seulement avec une modulation BOC mais avec toute modulation comportant une ou plusieurs sous-porteuse.

L'invention consiste en ce que le procédé de poursuite des signaux de radionavigation par satellite modulés par une modulation avec une ou plusieurs sous-porteuse en réception comporte l'élimination de la ou des sous-porteuses.

Les caractéristiques et avantages de l'invention apparaîtront plus clairement à la lecture de la description, faite à titre d'exemple, et des figures s'y rapportant qui représentent :

- Figure 1a et 1b, respectivement la fonction d'autocorrélation et la fonction discriminante pour une modulation BPSK,
- Figure 2a et 2b , respectivement la fonction d'autocorrélation et la fonction discriminante pour une modulation BOC,
- Figure 3, dispositif de poursuite de signaux de radionavigation modulés BOC selon l'invention,
- Figure 4, représentation du code à différents points du dispositif représenté sur la figure 3,

La figure 3 montre un exemple de dispositif de poursuite de signaux selon l'invention. Ce dispositif utilise l'élimination de la sous-porteuse de la modulation BOC pour rendre la poursuite du signal de radionavigation reçu plus robuste en mode Code Only.

Il comporte un dispositif de calcul de la fonction discriminante 10. Ce dispositif 10 comporte sept entrées E1 à E7 et une sortie S. Il reçoit le signal r provenant du satellite sur la première entrée E1. La première entrée E1 forme la voie primaire $V^1_1$ qui est divisé en deux voies secondaires parallèle identiques $V^2_1$ et $V^2_2$.

La première voie secondaire $V^2_1$ est multiplié par la porteuse en phase $c_i$ de la deuxième entrée E2. La deuxième voie secondaire $V^2_2$ est multiplié par la porteuse en quadrature $cq$ de la troisième entrée E3. Chacune de ces voies secondaires $V^2_1$ et $V^2_2$ est divisée en deux voies ternaires parallèles $V^3_1$ à $V^3_4$.

La première voie ternaire $V^3_1$ issue de la première voie secondaire $V^2_1$ est multipliée par la sous-porteuse en phase $s_i$ de la sixième entrée E6. La deuxième voie ternaire $V^3_2$ issue de la première voie secondaire $V^2_1$ est multipliée par la sous-porteuse en quadrature $s_q$. La troisième voie ternaire $V^3_3$ issue de la deuxième voie secondaire $V^2_2$ est multipliée par la sous-porteuse en phase $s_i$ de la sixième entrée E6. La quatrième voie ternaire $V^3_4$ issue de la deuxième voie secondaire $V^2_2$ est multipliée par la sous-porteuse en quadrature $s_q$ de la septième entrée E7. Chacune des voies ternaires $V^3_1$ à $V^3_4$ est divisée en deux voies quaternaires parallèles $V^4_1$ à $V^4_8$.

La première voie quaternaire $V^4_1$ issue de la première voie ternaire $V^3_1$ est multipliée par le code en avance de phase $c_a$ de la quatrième entrée E4. La deuxième voie quaternaire $V^4_2$ issue de la première voie ternaire $V^3_1$ est multipliée par le code en retard de phase $c_r$ de la cinquième entrée E5. La troisième voie quaternaire $V^4_3$ issue de la deuxième voie ternaire $V^3_2$ est multipliée par le code en avance de phase $c_a$ de la quatrième entrée E4. La quatrième voie quaternaire $V^4_4$ issue de la deuxième voie ternaire $V^3_2$ est multipliée par le code en retard de phase $c_r$ de la cinquième entrée E5. La cinquième voie quaternaire i $V^4_5$ issue de la troisième voie ternaire $V^3_3$ est multipliée par le code en avance de phase $c_a$ de la quatrième entrée E4. La sixième voie quaternaire $V^4_6$ issue de la troisième voie ternaire $V^3_3$ est multipliée par le code en retard de phase $c_r$ de la cinquième entrée E5. La septième voie quaternaire $V^4_7$ issue de la quatrième voie ternaire $V^3_4$ est multipliée par le code en avance de phase $c_a$ de la quatrième entrée E4. La huitième voie quaternaire $V^4_8$ issue de la quatrième voie ternaire $V^3_4$ est multipliée par le code en retard de phase $c_r$ de la cinquième entrée E5.

Sur chaque voie quaternaire $V^4_1$ à $V^4_8$, les signaux ainsi obtenus sont traités par un dispositif d'intégration et de remise à zéro $11_1$ à $11_8$ (integrate and dump device, en anglais) qui produit des échantillons désétalés et cumulés. Le signal $I_{IA}$ de la première voie quaternaire $V^4_1$ est formé par les échantillons cumulés en phase pour la porteuse, en phase pour la sous-porteuse et en avance de phase pour le code. Le signal $I_{IR}$ de la deuxième voie quaternaire $V^4_2$ est formé par les échantillons cumulés en phase pour la porteuse, en phase pour la sous-porteuse et en retard de phase pour le code. Le signal $I_{QA}$ de la troisième voie quaternaire $V^4_3$ est formé par les échantillons cumulés en phase pour la porteuse, en quadrature pour la sous-porteuse et en avance de phase pour le code. Le signal $I_{QR}$ de la quatrième voie quaternaire $V^4_4$ est formé par les échantillons cumulés en phase pour la porteuse, en quadrature pour la sous-porteuse et en retard de phase pour le code. Le signal $Q_{IA}$ de la cinquième voie quaternaire $V^4_5$ est formé par les échantillons cumulés en quadrature pour la porteuse, en phase pour la sous-porteuse et en avance de phase pour le code. Le signal $Q_{IR}$ de la sixième voie quaternaire $V^4_6$ est formé par les échantillons cumulés en quadrature pour la porteuse, en phase pour la sous-porteuse et en retard de phase pour le code. Le signal $Q_{QA}$ de la septième voie quaternaire $V^4_7$ est formé par les échantillons cumulés en quadrature pour la porteuse, en quadrature pour la sous-porteuse et en avance de phase pour le code. Le signal $Q_{QR}$ de la huitième voie quaternaire $V^4_8$ est formé par les échantillons cumulés en quadrature pour la porteuse, en quadrature pour la sous-porteuse et en retard de phase pour le code.

Alors, tous les signaux en avance de phase pour le code sont normés et additionnés par le dispositif $13_A$ pour former $I_{IA}^2 + I_{QA}^2 + Q_{IA}^2 + Q_{QA}^2$ sur une voie et tous les signaux en retard de phase pour le code sont normés et additionnés par le dispositif $13_R$ pour former $I_{IR}^2 + I_{QR}^2 + Q_{IR}^2 + Q_{QR}^2$ sur une autre voie. Un discriminateur de code 14 reçoit des deux énergies et divise la différence de l'énergie d'avance et de l'énergie de retard par leur somme

$$\varepsilon = (I_{IA}^2 + I_{QA}^2 + Q_{IA}^2 + Q_{QA}^2 (I_{IR}^2 + I_{QR}^2 + Q_{IR}^2 + Q_{QR}^2))/(I_{IA}^2 + I_{QA}^2 + Q_{IA}^2 + Q_{QA}^2 + I_{IR}^2 + I_{QR}^2 + Q_{IR}^2 + Q_{QR}^2).$$

Cette information de discrimination $\varepsilon$ est utilisée par le correcteur de code 21. L'information de correction de code produite par ce correcteur 21 est additionnée à l'aide de vitesse externe $a_{ve}$ et utilisé par l'oscillateur de code 22 de la boucle de code 20, par exemple un oscillateur contrôlé numérique (NCO pour Numerical Controlled Oscillator en anglais). Cet oscillateur 22 contrôle le générateur de réplique de code 23 et le générateur de réplique de la sous-porteuse BOC 24.

Le générateur de réplique de code 23 fournit la réplique de code en avance de phase $c_a$ couplée sur la quatrième entrée E4 du dispositif de calcul de la fonction discriminante 10 et la réplique de code en retard de phase $c_r$ couplée sur la cinquième entrée E5 du dispositif de calcul de la fonction discriminante 10. Le générateur de réplique de sous-porteuse 24 fournit la réplique de sous-porteuse en phase $s_i$ couplée sur la sixième entrée E6 du dispositif de calcul de la fonction discriminante 10 et la réplique de sous-porteuse en quadrature $s_q$ couplée sur la septième entrée E7 du dispositif de calcul de la fonction discriminante 10.

Dans la boucle de porteuse 30, l'oscillateur de porteuse 31, un oscillateur NCO par exemple, reçoit en mode code Only l'aide de vitesse externe $a_{ve}$. Il contrôle le générateur de réplique de porteuse 32. Ce générateur de réplique de porteuse 32 peut, par exemple, comporter une fonction sinus $32_S$ et une fonction cosinus $32_C$. L'une de ces fonctions génère la réplique de la porteuse en phase $c_i$ couplée à l'entrée E2 du dispositif 10 et l'autre la réplique de la porteuse en quadrature cq couplée à l'entrée E3 du dispositif 10.

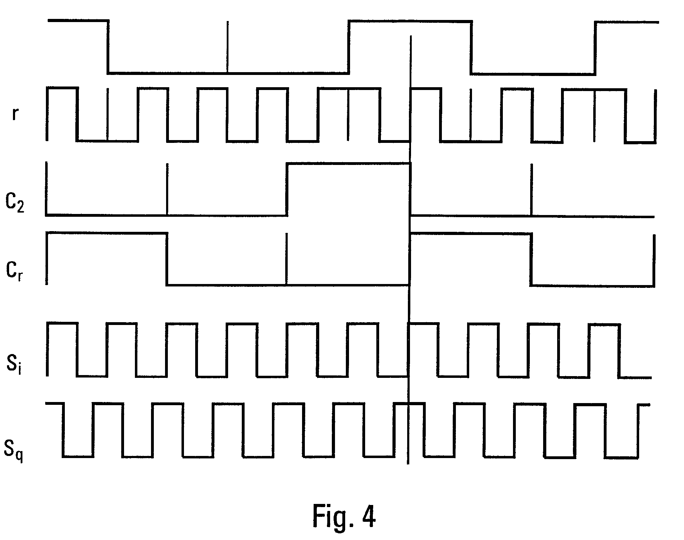

La figure 4 montre sur tout d'abord le code reçu sans modulation BOC sur la première ligne, et le code reçu avec la modulation BOC r par le dispositif de poursuite de la figure 3 sur la deuxième ligne. Les troisième et quatrième lignes illustrent les répliques du code, respectivement en avance $c_a$ et retard $c_r$ de phase, générées par le dispositif 23 et couplées aux entrées E4 et E5 du dispositif de calcul de la fonction discriminante 10. Les cinquième et sixième lignes illustrent les répliques de la sous-porteuse BOC respectivement en phase $s_i$ et quadrature $s_q$ générées par le dispositif 24 et couplées aux entrées E6 et E7 du dispositif de calcul de la fonction discriminante 10.

Ce schéma d'élimination de la sous-porteuse pour le calcul de la fonction discriminante peut-être utilisé pour toute modulation avec une sous-porteuse et pour tout type d'application nécessitant le calcul de cette fonction discriminante. L'utilisation dans le cadre de la modulation BOC et pour la poursuite de signaux de radionavigation ne constitue qu'un exemple d'utilisation de l'invention.

De plus, le schéma d'élimination de la sous-porteuse par multiplication par la réplique de la sous-porteuse en phase et en quadrature peut être utilisé plus d'une fois lorsque la modulation en question est une modulation avec plusieurs sous-porteuse et non pas une seule.

**Revendications**

1. Procédé de calcul de la fonction discriminante de signaux modulés par une modulation avec une ou plusieurs sous-porteuse **caractérisé en ce qu'**il comporte l'élimination de la ou lesdites sous-porteuses.

2. Dispositif de calcul de la fonction discriminante de signaux modulés BOC comportant une première entrée pour les signaux reçus, une deuxième et une troisième entrée permettant le couplage dudit dispositif de calcul de la fonction discriminante avec le générateur de porteuse, l'une en phase, l'autre en quadrature, une quatrième et une cinquième entrée pour le couplage dudit dispositif de calcul de la fonction discriminante avec le générateur de code, l'une en avance, l'autre en retard, et une sortie pour la fonction discriminante **caractérisé en ce qu'**il comporte l'élimination de la sous-porteuse.

3. Dispositif de calcul de la fonction discriminante selon la revendication précédente **caractérisé en ce qu'**il comporte une sixième et une septième entrée pour le couplage dudit dispositif de calcul de la fonction discriminante avec le générateur de sous-porteuse, l'une en phase , l'autre en quadrature.

4. Dispositif de calcul de la fonction discriminante selon l'une des revendications 2 ou 3 **caractérisé en ce que** la fonction discriminante est égale à la différence entre l'énergie en avance de phase et l'énergie en retard de phase : $(I_{IA}{}^2 + I_{QA}{}^2 + Q_{IA}{}^2 + Q_{QA}{}^2 - (I_{IR}{}^2 + I_{QR}{}^2 + Q_{IR}{}^2 + Q_{QR}{}^2))/ (I_{IA}{}^2 + I_{QA}{}^2 + Q_{IA}{}^2 + Q_{QA}{}^2 + I_{IR}{}^2 + I_{QR}{}^2 + Q_{IR}{}^2 + Q_{QR}{}^2)$.

5. Dispositif de poursuite de signaux de radionavigation par satellite modulés BOC en réception comportant:

■ une première entrée recevant le signal reçu,
■ une deuxième entrée recevant une aide de vitesse externe,
■ un dispositif de calcul de la fonction discriminante dont la première entrée est couplée à la première entrée dudit récepteur,
■ un correcteur de code couplé à la sortie dudit dispositif de calcul de la fonction discriminante,
■ une boucle de porteuse couplée à la deuxième entrée dudit récepteur,
■ deux fonctions sinus et cosinus couplées à la sortie de la boucle de porteuse permettant d'obtenir la porteuse en phase et en quadrature couplée aux deuxième et troisième entrées dudit dispositif de calcul de la fonction discriminante,

- ■ une boucle de code recevant la sortie du correcteur de code à laquelle a été ajoutée l'aide de vitesse externe,
- ■ un générateur de code couplé à la sortie de la boucle de code et aux quatrième et cinquième entrées dudit dispositif de calcul de la fonction discriminante,

**caractérisé en ce que** :

- ■ ledit dispositif de calcul de la fonction discriminante est le dispositif selon l'une des revendications 2 ou 3, et **en ce que**
- ■ ledit récepteur comporte un générateur de sous-porteuse couplé à la sortie de la boucle de code et aux sixième et septième entrées dudit dispositif de calcul de la fonction discriminante.

6. Procédé de poursuite des signaux de radionavigation par satellite modulés BOC en réception **caractérisé en ce qu'**il comporte l'élimination de la sous-porteuse.

Fig. 1a

Fig. 2a

Fig. 1b

Fig. 2b

Fig. 3

Fig. 4

**Office européen des brevets**

**RAPPORT DE RECHERCHE EUROPEENNE**

Numéro de la demande

EP 02 29 2903

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 1 102 415 A (NOKIA MOBILE PHONES LTD) 23 mai 2001 (2001-05-23) * page 2, ligne 16 - ligne 19 * * page 5, ligne 29 - ligne 58 * * figure 2 * | 1-3,5,6 | H04B1/707 |
| A | KAPLAN ET AL: "UNDERSTANDING GPS - Principles and Applications" UNDERSTANDING GPS PRINCIPLES AND APPLICATIONS, 2000, pages 142-150, XP002165743 * figure 5.13 * | 1,2,6 | |
| A | JWO D-J: "Optimisation and sensitivity analysis of GPS receiver tracking loops in dynamic environments" IEE PROCEEDINGS: RADAR, SONAR & NAVIGATION, INSTITUTION OF ELECTRICAL ENGINEERS, vol. 148, no. 4, 1 août 2001 (2001-08-01), pages 241-250, XP006017310 IEEE, UK ISSN: 1350-2395 * figure 1 * | 1-6 | |
| | | | DOMAINES TECHNIQUES RECHERCHES (Int.Cl.7) |
| A | EP 1 102 083 A (THOMSON CSF) 23 mai 2001 (2001-05-23) * page 10, ligne 15 - ligne 34 * * figure 9 * | 1-6 | H04B H04L G01S |

Le présent rapport a été établi pour toutes les revendications

| Lieu de la recherche | Date d'achèvement de la recherche | Examinateur |
|---|---|---|
| LA HAYE | 13 février 2003 | Moreno, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**  EP 02 29 2903

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-02-2003

| Document brevet cité au rapport de recherche | | Date de publication | Membre(s) de la famille de brevet(s) | | Date de publication |
|---|---|---|---|---|---|
| EP 1102415 | A | 23-05-2001 | US | 6483867 B1 | 19-11-2002 |
| | | | EP | 1102415 A2 | 23-05-2001 |
| | | | JP | 2001208826 A | 03-08-2001 |
| EP 1102083 | A | 23-05-2001 | FR | 2801449 A1 | 25-05-2001 |
| | | | EP | 1102083 A1 | 23-05-2001 |

EPO FORM P0460